# EUROPÄISCHE PATENTSCHRIFT

(11) **EP 3 131 771 B1**
(45) Veröffentlichungstag und Bekanntmachung des Hinweises auf die Patenterteilung: **04.09.2019**
(21) Anmeldenummer: 15717001.0
(22) Anmeldetag: 17.04.2015
(51) Int. Cl.: B60G 17/052, B60G 17/015, B60G 17/056

(54) **INTEGRIERTE LUFTVERSORGUNGSEINHEIT**
INTEGRATED AIR-SUPPLY UNIT
UNITÉ D'ALIMENTATION EN AIR INTÉGRÉE

(30) Priorität: 17.04.2014 DE 102014207509
(43) Veröffentlichungstag der Anmeldung: 22.02.2017
(73) Patentinhaber: Continental Teves AG & Co. OHG, 60488 Frankfurt am Main (DE)
(72) Erfinder: BOHN, Joachim, 56414 Hundsangen (DE); COURTH, Christian, 60439 Frankfurt (DE); FOLCHERT, Uwe, 31867 Lauenau (DE); VOSS, Christoph, 60435 Frankfurt (DE); ZYDEK, Michael, 60529 Frankfurt (DE); HEIN, Dierk, 30900 Wedemark (DE); HINZ, Axel, 61267 Neu-Anspach (DE); WITALA, Christian, 30167 Hannover (DE)
(86) Internationale Anmeldenummer: PCT/EP2015/058409
(87) Internationale Veröffentlichungsnummer: WO 2015/158904

(56) Entgegenhaltungen:
- DE-A1-102008 045 213
- DE-A1-102012 005 345
- JP-A- H08 151 978
- US-A- 5 678 900
- US-A- 5 711 150
- US-A1- 2013 255 787
- US-A1- 2013 320 639

## Beschreibung

Die Erfindung betrifft eine integrierte Luftversorgungseinheit, insbesondere für Luftfedersysteme für Kraftfahrzeuge umfassend einen Luftverdichter mit einem Elektromotor und einem Lufttrockner, wobei der Luftverdichter mit Elektromotor, dem Lufttrockner und mehreren pneumatischen Anschlüssen eine funktionelle Einheit bilden.

Aus der DE 102005030726 A1 ist eine Luftfederungsanlage für Fahrzeuge bekannt, welche die notwendigen Komponenten aktueller Luftfedersysteme umfasst. Diese verfügt über einen Verdichter, einen Lufttrockner, einen Druckspeicher, sowie verschiedene Ventile und Druckluftleitungen. Des Weiteren verfügt die Luftfederungsanalage über Drucksensoren und wird über ein Steuergerät angesteuert.

Die Hauptkomponenten einer Luftversorgung für Luftfedersysteme gemäß dem Stand der Technik, umfassend Luftverdichter, Ventile und Steuergerät, werden üblicherweise separat voneinander schwingungstechnisch entkoppelt im Fahrzeug untergebracht. Dabei werden die Komponenten über eigenständige, wenig platzsparende pneumatische und elektrische Leitungen verbunden, was zu einem hohen Applikationsaufwand und zu hohen Kosten führt.

Bei der Luftversorgung von Luftfedersystemen für Kraftfahrzeuge kommen als Verdichter üblicherweise 1- oder 2- stufige Verdichterkonzepte mit Linearkolben zum Einsatz. Solche Verdichter werden meist über einen Elektromotor angetrieben und bestehen aus einem Kurbelgehäuse aus Kunststoff oder Alu Druckguß, einem Zylinder mit Zylinderkopf aus Alu Druckguß und einer Trocknereinheit aus Kunststoff. Zusätzlich werden ein oder mehrere Ventile, zum Beispiel Einlass- oder Auslassventile am Zylinderkopf angebracht. Die Motoransteuerung des Elektromotors erfolgt in der Regel über mechanische Relais und ist nicht am Verdichter verbaut, was wiederum zu zusätzlichen Leitungen führt.

Bekannt sind weiterhin auch kombinierte Luftversorgungseinheiten für Luftfedersysteme, die allerdings meist bei einfachen Hinterachs-Niveauregelsystemen zum Einsatz kommen. Dabei werden die Ventile zusammen mit dem Steuergerät an einen Kompressor angebaut. Auch bei dieser Ausführungsform müssen die Komponenten umständlich über weitere Leitungen verbunden werden und diese Nischenanwendung lässt sich somit ebenfalls nicht kostenoptimal herstellen.

Aus US 2013/255787 A1 und US 2013/320639 A1 sind Druckluftversorgungsanlagen bekannt, welche dem Betreiben einer Luftfederanlage dienen. Diese Druckluftversorgungsanlagen sind in eine Anzahl von Bereichen unterteilt, wobei in einem ersten Bereich ein Motor, in einem zweiten Bereich der vom Motor antreibbare Luftverdichter und in einem mit dem zweiten Bereich verbundenen dritten Bereich ein Lufttrockner mit einen Magnetventilanordnung vorgesehen ist. Diese Magnetventilanordnung wird mit einem Deckel verschlossen, in welchem eine Steuerelektronik vorgesehen ist.

Aus US 5,711,150 A und JP H08 151978 A sind Luftverdichter bekannt, bei welchen elektrisch schaltbare Ventile am Zylinderkopf des Verdichters und außerhalb des Verdichtergehäuses vorgesehen sind.

Die DE 10 2012 005 345 A1, die den Oberbegriff des Anspruchs 1 zeigt, offenbart eine Druckluftversorgungsanlage mit einem Verdichter in einem Gehäuse, wobei an einer Seite des Verdichtergehäuses ein Elektromotor vorgesehen ist und an der gegenüberliegenden Seite eine Ventilanordnung über einen Flansch mit dem Verdichtergehäuse verbunden wird.

Daher ist es Aufgabe der Erfindung, eine kompakte Luftversorgungseinheit für zweiachsige oder vierachsige Luftfedersysteme zu schaffen, die kostengünstig herstellbar ist und weniger Bauraum einnimmt.

Die der Erfindung zugrundeliegende Aufgabe wird mit den Merkmalen des unabhängigen Patentanspruchs gelöst.

Erfindungsgemäß wird mittels Integration der Komponenten, Luftverdichter mit Elektromotor, Lufttrockner, pneumatische Ventile und elektronisches Steuergerät eine funktionelle Einheit gebildet. Kern dieser funktionellen Einheit ist ein pneumatischer Block, an dem alle weiteren Komponenten angeordnet sind. Dieser pneumatische Block enthält einen Part pneumatischer Ventile und deren Gegenpart ist in einem elektronischen Steuergerät angeordnet. Weiterhin ist an dem pneumatischen Block frontseitig der Elektromotor und der Lufttrockner angeordnet. Dem Elektromotor gegenüberliegend ist an dem pneumatischen Block das elektronische Steuergerät angebracht. Zum Anschluss weiterer Komponenten am pneumatischen Block, zum Beispiel einem Druckspeicher, sind pneumatische Anschlüsse vorgesehen. So wird eine kompakte bauliche Einheit geschaffen, die zur Luftversorgung von Luftfedersystem für Kraftfahrzeuge geeignet ist.

Bevorzugt enthält der pneumatische Block Kanäle, welche als pneumatische Leitungen fungieren und den Luftverdichter, den Lufttrockner, die pneumatischen Ventile und die pneumatischen Anschlüsse untereinander verbinden.

In dem pneumatischen Block sind vorzugsweise Antriebseinheiten der pneumatischen Magnetventile, insbesondere bestehend aus Kern, Hülse, Anker, Feder und Dichtsitz, fest integriert. In dem elektronischen Steuergerät sind die entsprechenden Spulen den pneumatischen Magnetventile bevorzugt separat angeordnet und elektromechanisch betätigbar. Diese werden passend auf die Antriebseinheiten aufgesteckt und toleranzausgleichend, vorzugsweise mittels federnder Elemente, auf Position gehalten.

In dem pneumatischen Block ist als Verdichter vorzugsweise ein Hubkolbenkompressor vorgesehen, der über den am pneumatischen Block angebrachten Elektromotor angetrieben wird. Die Integration eines Hubkolbenkompressors in einem Block mit gemeinsamen Ventilen führt zur kompakten Bauweise der Luftversorgungseinheit.

Der als Dreizylinder Stern-Kompressor ausgebildete Verdichter umfasst vorzugsweise drei Kolben auf die die Verdichterkräfte verteilt werden. Dadurch ergeben sich geringere Momentschwankungen und ein niedrigeres Anlaufmoment, was zu einem ruhigeren Kompressorlauf führt.

Die kompakte Bauweise des Dreizylinder Stern-Kompressors beruht auf der zentralen Lagerung an einem Pleuelzapfen. Durch diese Anordnung reduziert sich die resultierende Querkraft auf den Pleulzapfen, wodurch das Motorlager weniger belastet wird und kleiner dimensioniert werden kann. Durch die geringeren Verdichtungsvolumen der Zylinder entstehen geringere Wärmemengen, die einfacher abgeführt werden können. Diese Vorteile des Dreizylinder Stern-Kompressors bewirken eine längere Laufzeit und bessere Einschaltzeiten, was zu einer hohen und langlebigeren Leistung der integrierten Luftversorgungseinheit führt.

Gemäß einer weiteren bevorzugten Ausführungsform ist der Verdichter als Zwei-Kolbenkompressor ausgebildet, wobei die Kolben zentral an einem Pleuelzapfen gelagert sind. Dadurch ergeben sich ebenfalls geringe Momentschwankungen und ein niedrigeres Anlaufmoment mit Folge eines ruhigen Kompressorlaufs.

Mittels der Lagerung an einem Pleuelzapfen wird das Motorlager ebenfalls geringer belastet, womit dieses kleiner dimensioniert werden kann. Auch die geringeren Verdichtungsvolumen der Zylinder des Zwei-Kolbenkompressors führen zu geringeren Wärmemengen, die einfacher abgeführt werden können. Diese Vorteile bewirken ebenfalls eine längere Laufzeit und bessere Einschaltzeiten, mit der Folge einer hohen und langlebigeren Leistung der integrierten Luftversorgungseinheit.

Der pneumatische Block wird vorzugsweise aus Aluminium gefertigt und mechanisch bearbeitet. Mittels dieser Werkstoffwahl wird die Wärmeabführ unterstützt. Dadurch lässt sich eine hohe Qualität erzielen und verschiedene Varianten des pneumatischen Blockes lassen sich einfach und kostengünstig herstellen. Über die Kanäle innerhalb des Blockes werden zwischen den Komponenten, Kompressor, Lufttrockner, pneumatische Ventile und pneumatischen Anschlüsse, pneumatische Verbindungen geschaffen. Vorteilhafterweise entfallen mittels der in den pneumatischen Block gebohrten Kanäle die im Fahrzeug üblicherweise verlegten pneumatischen Verbindungen der einzelnen Komponenten untereinander.

Das Gehäuse des elektronischen Steuergerätes wird vorzugsweise aus Kunststoff hergestellt und enthält insbesondere einen elektronischen Anschluss an das Fahrzeugbordnetz. Dieses wird zum Schutz gegen Umwelteinflüsse vorteilhafterweise dichtend auf den pneumatischen Block aufgesteckt.

Der elektronische Anschluss am Steuergerät dient für alle erforderlichen Signalleitungen sowie für die gesamte Stromversorgung, womit der Montage- und Applikationsaufwand deutlich gesenkt wird.

Die Motoransteuerung des Elektromotors ist nun in die Luftversorgung integriert und erfolgt über Halbleiterschalter. Weiterhin kann das Steuergerät auch übliche Aufgaben von Luftfedersystemen, wie Niveau- und Dämpferregelung durchführen.

Die internen elektronischen Verbindungen des Steuergerätes mit den anderen Komponenten erfolgen vorzugsweise über Steckverbindungen oder Pressfit-Verbindungen und sind somit störungsunempfindlich. Mit kurzen Verbindungskontakten werden die Magnetventilspulen auf den elektronischen Endstufen des Steuergerätes verbunden, wodurch mögliche Störungen reduziert werden. Somit verbessert sich die Elektromagnetische Verträglichkeit. Die kurzen Verbindungen haben zur Folge, dass Spannungsabfälle durch Leitungen minimiert werden und sich die Leistungsausbeute der Magnetventile erhöht. Folglich können kurze und unempfindliche Regelkreise genutzt werden, woraus sich neben Push und Hold-Ansteuerungen auch weitere Stromregelungen, wie zum Beispiel Rampenansteuerung, realisieren lassen. Die Magnetventile können mit höheren betriebssicheren Pushströmen genutzt werden, wodurch das Bauvolumen der Magnetventile reduziert werden kann.

Mittels der integrierten Luftversorgung kann für die Motoransteuerung eine Diagnosefunktion sicher dargestellt werden und Betriebsdaten wie zum Beispiel "Kompressorlauf ja/nein" gespeichert und ausgewertet werden. Aufgrund der Tatsache, dass die sonst üblichen elektrischen Leitungen entfallen sind, verbessert sich das gesamte Diagnose- und Failsafeverhalten. Störeinflüsse können durch die direkte Verbindung zwischen Kompressor, Magnetventilblock und Steuergerät ausgeschlossen werden. Alle Verbindungen und Funktionen innerhalb der Luftversorgungseinheit können somit überwacht werden.

Nach einer weiteren bevorzugten Ausführungsform der Erfindung ist es möglich, Komponenten innerhalb der Luftversorgungseinheit bei Inbetriebnahme zu kalibieren und die Einstellungen im elektronischen Steuergerät zu hinterlegen. Dies erhöht die Funktionalität und Genauigkeit der integrierten Luftversorgungseinheit.

In der integrierten Luftversorgungseinheit können verschiedenarte Sensoren untergebracht werden. Gemäß der Anwendung für Luftfedersysteme sind dies üblicherweise Drucksensoren, Beschleunigungssensoren und Temperatursensoren. Weitere Sensoren, wie Bewegungs- oder Höhenänderungssensoren können ebenfalls integriert werden.

Gemäß einer weiteren bevorzugten Ausführungsform ist ein Drucksensor pneumatischen Block angeordnet, welcher insbesondere über federnde Kontakte mit dem elektrischen Steuergerät kontaktiert ist.

Verwendung findet die integrierte Luftversorgungseinheit bevorzugt in Luftfedersystemen für Kraftfahrzeuge mit dem Konzept einer geschlossenen Luftversorgung. Bei diesem Luftfedersystem bestehen die Komponenten aus Luftverdichter mit Elektromotor, Lufttrockner, pneumatischen Ventile und pneumatischen Anschlüssen sowie einem elektronischen Steuergerät.

Dieses Luftfedersystem verfügt über eine elektronisch ansteuerbare Umschaltventileinrichtung, die vier 2/2-Wegeventile aufweist.

Die voneinander unabhängig schaltbaren Ventile sind in der Umschaltventileinrichtung so eingebaut, dass die Druckdifferenz immer in eine Richtung verläuft und der höhere Druck die Ventile verschließt. Dadurch dass die Federkraft den Dichtsitz nicht gegen den Druck zuhalten muss, können Federn mit kleineren Federkräften verbaut werden, was wiederum kleinere Ventile und Spulen ermöglicht.

Für das Luftfedersystem werden mittels der Umschaltventileinrichtung verschiedene Betriebszustände bewerkstelligt.

So erfolgt im Betrieb der geschlossenen Luftversorgung die Befüllung der Luftfedern aus dem Druckspeicher ohne Verwendung des Kompressors. Hierbei werden alle vier Umschaltventile geöffnet und mittels des großen zur Verfügung stehenden Querschnitts findet eine schnelle Befüllung der Luftfedern statt. Ebenso findet auch das Entleeren der Luftfedern zurück in den Druckspreicher über alle vier geöffneten Umschaltventile auf schnelle Weise statt.

Nach einer weiteren bevorzugten Ausführungsform weist die Umschaltventileinrichtung vier vorgesteuerte 2/2-Wegeventile auf.

Diese Ventile haben den Vorteil, große pneumatische Leistungen schaltbar zu machen, da die Leistung von Druck und Volumenstrom abhängig ist. Die Ventile verhalten sich in Abhängigkeit von Durchflussrichtung beziehungsweise Druckdifferenz unterschiedlich. So können Öffnungs- und Schließhaltedrücke sowie Öffnungsquerschnitte bedarfsgerecht ausgelegt werden. Durch den Einsatz dieser Ventile erhöht sich die Gesamtausnutzung. Außerdem kann das Bauvolumen gegenüber bekannten Ausführungen deutlich reduziert werden.

Weitere bevorzugte Ausführungsformen ergeben sich aus den Unteransprüchen und der nachfolgenden Beschreibung eines Ausführungsbeispiels an Hand von Figuren.

Es zeigen
Fig. 1 eine integrierte Luftversorgungseinheit für ein Luftfedersystem für Kraftfahrzeuge und
Fig. 2 ein Pneumatikschaltbild eines Luftfedersystems mit einem Dreizylinder Stern-Kompressor und
Fig. 3 ein Pneumatikschaltbild mit einer Umschaltventileinrichtung mit vier 2/2-Wegeventilen und
Fig. 4 ein Pneumatikschaltbild mit einer Umschaltventileinrichtung mit vier vorgesteuerten 2/2-Wegeventilen.

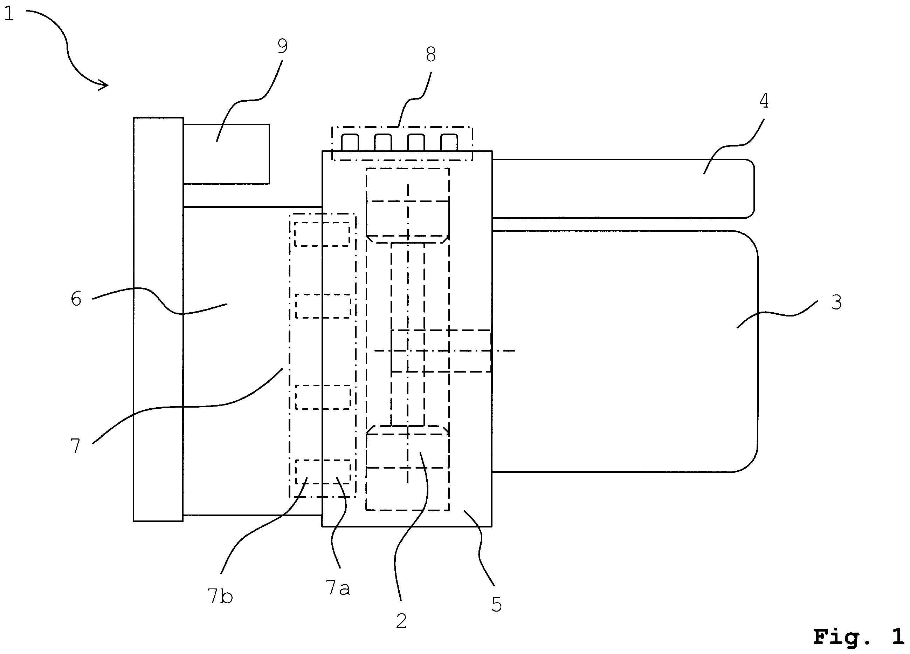

Fig. 1 zeigt eine integrierte Luftversorgungseinheit 1 für ein Luftfedersystem für Kraftfahrzeuge in schematischer Darstellung. Innerhalb des pneumatischen Blocks 5 befindet sich angedeutet ein Luftverdichter 2, der über einen frontseitig angebrachten Elektromotor 3 angetrieben wird. Weiterhin ist frontseitig ein Lufttrockner 4 angebracht.

Der pneumatische Block 5 verfügt über nicht näher dargestellte Aufnahmen für einzelne Komponenten. Schematisch sind mehrere pneumatische Ventile 7 angedeutet, die innerhalb des pneumatischen Blocks 5 und zueinander passend im elektronischen Steuergerät 6 angeordnet sind.

Im pneumatischen Block 5 sind Antriebseinheiten 7a der pneumatischen Ventile 7 bestehend aus Kern, Hülse, Anker, Feder und Dichtsitz integriert. Im elektrischen Steuergerät 6 sind Magnetventilspulen 7b der pneumatischen Ventile 7 integriert. Antriebseinheiten 7a und Magnetventilspulen 7b sind passend ineinander gefügt.

Zudem enthält der pneumatische Block 5 nicht dargestellte Kanäle, die als pneumatische Leitungen fungieren. Diese pneumatischen Leitungen verbinden Luftverdichter 2, Lufttrockner 4, pneumatische Ventile 7 und pneumatischen Anschlüsse 8 untereinander. Die pneumatischen Anschlüsse 8 sind in den entsprechenden Aufnahmen des pneumatischen Blockes 5 angeordnet und dienen dem Verbinden mit weiteren Komponenten eines Luftfedersystems wie zum Beispiel einem Druckspeicher.

Neben einem Teil der pneumatischen Ventile 7 enthält das elektronische Steuergerät 6 einen elektronischen Anschluss 9. Über diesen Anschluss ist die integrierte Luftversorgungseinheit 1 komplett an das Fahrzeugbordnetz angeschlossen und kann so konfiguriert und ausgelesen werden. Über das elektronische Steuergerät 9 werden Elektromotor 3 und pneumatische Ventile 7 angesteuert.

Des Weiteren ist ein nicht näher dargestellter Drucksensor im elektrischen Steuergerät integriert und mit dem Steuergerät kontaktiert. Die integrierte Luftversorgungseinheit 1 enthält weitere nicht näher gezeigte Sensoren, zum Beispiel Beschleunigungssensoren und Temperatursensoren.

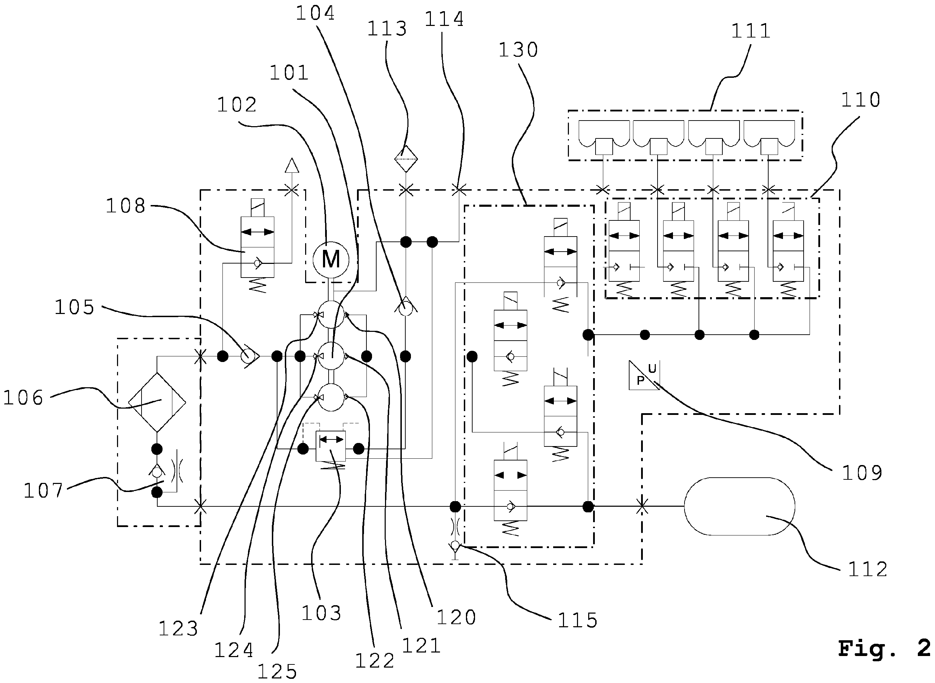

In Fig. 2 ist ein Pneumatikschaltbild eines Luftfedersystems mit einem Dreizylinder Stern-Kompressor 101 dargestellt. Der Dreizylinder Stern-Kompressor 101 wird über den Elektromotor 102 angetrieben. Mittels des Luftfilters 113 wird über ein Rückschlagventil 104 dem Dreizylinder Stern-Kompressor 101 Luft aus der Umgebung zugeführt. Dabei verfügt der Dreizylinder Stern-Kompress über drei Einlassventile 120, 121 und 122 sowie über drei Auslassventile 123, 124, 125. Somit kann ein mehrstufiges Verdichterkonzept geschaltet werden. Über ein zweites Rückschlagventil 105 kann Luft über das Ablassventil 108 an die Umgebung angegeben werden oder über das Drossel-Rückschlagventil 107 und den Lufttrockner 106 weiter an die Umschaltventileinrichtung 130 geleitet werden. Weiterhin ist ein Leistungsbegrenzungsventil 103 und die ECU-Entlüftung 114 mit dem Dreizylinder Sternkompressor 101 verbunden.

Die Umschaltventileinrichtung 130 dient der Luftversorgung der Luftfedern 111 über die jeweils einzelnen Luftfederventile 110, dabei ist zwischen der Umschalteinrichtung 130 und den Luftfederventilen 110 ein Drucksensor 109 zwischengeschaltet. Zur Weiteren Luftversorgung der Luftfedern 111 über die Umschaltventileinrichtung 130 dient ein Druckspeicher 112. Über die manuelle Entlüftung 115 kann Luft aus dem System entlassen werden.

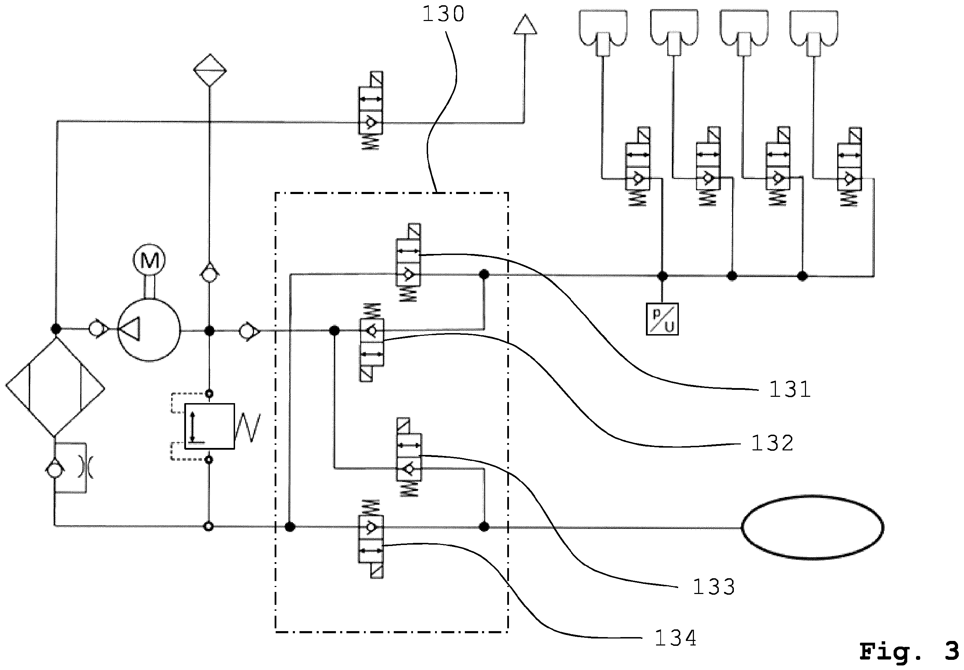

Das Pneumatikschaltbild in Fig. 3 zeigt eine Umschaltventileinrichtung bestehend aus vier 2/2-Wegeventilen in geschlossener Stellung. Befinden sich die Umschaltventile 131, 132, 133, 134 in geöffneter Stellung, findet ein schneller Luftaustausch zwischen dem Druckspeicher und den Luftfedern statt.

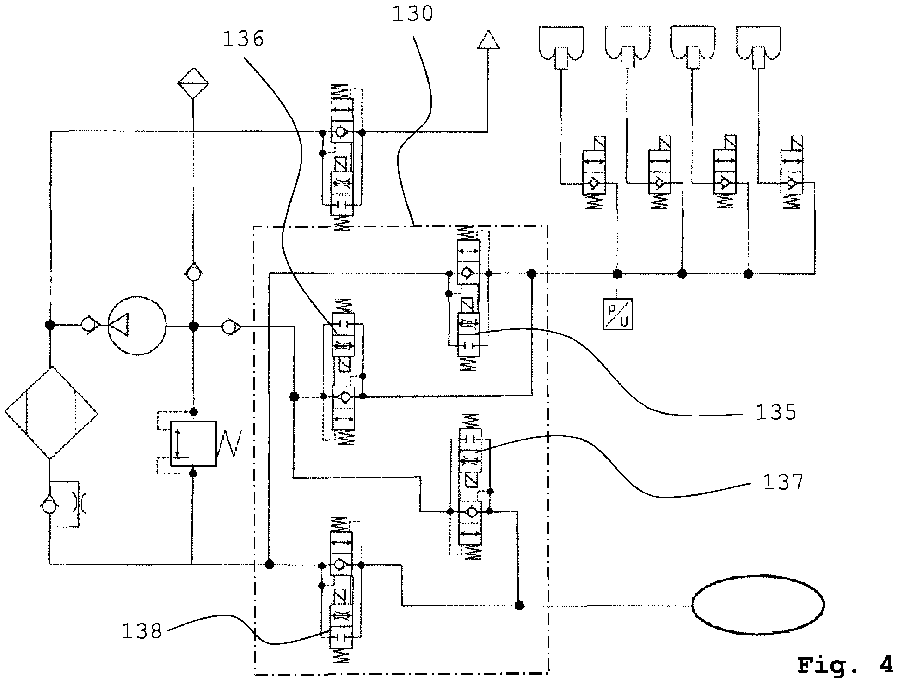

In dem Pneumatikschaltbild in Fig. 4 wird eine Umschaltventileinrichtung mit vier vorgesteuerten 2/2-Wegeventilen gezeigt.

### Bezugszeichenliste

- 1: integrierte Luftversorgungseinheit
- 2: Luftverdichter
- 3: Elektromotor
- 4: Luftrockertrockner
- 5: pneumatischer Block
- 6: elektronisches Steuergerät
- 7: pneumatische Ventile
- 7a: Antriebseinheiten
- 7b: Magnetventilspulen
- 8: pneumatische Anschlüsse
- 9: elektronischer Anschluss

- 101: Dreizylinder Stern-Kompressor
- 102: Elektromotor
- 103: Leistungsbegrenzungsventil
- 104: erstes Rückschlagventil
- 105: zweites Rückschlagventil
- 106: Lufttrockner
- 107: Drossel-Rückschlagventil
- 108: Ablassventil
- 109: Drucksensor
- 110: Luftfederventile
- 111: Luftfedern
- 112: Druckspeicher
- 113: Luftfilter
- 114: ECU-Entlüftung
- 115: manuelle Entlüftung

- 120: erstes Einlassventil
- 121: zweites Einlassventil
- 122: dritten Einlassventil
- 123: erstes Auslassventil
- 124: zweites Auslassventil
- 125: drittes Auslassventil

- 130: Umschaltventileinrichtung
- 131: erstes Umschaltventil
- 132: zweites Umschaltventil
- 133: drittes Umschaltventil
- 134: viertes Umschaltventil
- 135: erstes vorgesteuertes Umschaltventil
- 136: zweites vorgesteuertes Umschaltventil
- 137: drittes vorgesteuertes Umschaltventil
- 138: viertes vorgesteuertes Umschaltventil

## Patentansprüche

1. Integrierte Luftversorgungseinheit (1), insbesondere für Luftfedersysteme für Kraftfahrzeuge, umfassend einen Luftverdichter (2) mit einem Elektromotor (3) und einem Lufttrockner (4), wobei der Luftverdichter (2) mit dem Elektromotor (3), der Lufttrockner (4) und mehrere pneumatische Anschlüsse (8) eine funktionelle Einheit bilden, wobei die funktionelle Einheit zumindest aus einem pneumatischen Block (5) und einem elektronischen Steuergerät (6) gebildet ist, wobei in dem pneumatischen Block (5) der Luftverdichter (2) angeordnet ist und über den frontseitig am pneumatischen Block (5) angebrachten Elektromotor (3) angetrieben wird, **dadurch gekennzeichnet, dass** das elektronische Steuergerät (6) dem Elektromotor (3) gegenüberliegend an dem pneumatischen Block (5) angebracht ist, wobei mehrere pneumatische Ventile (7) teilweise in dem pneumatischen Block (5) und teilweise in dem elektronischen Steuergerät (6) angeordnet sind.

2. Integrierte Luftversorgungseinheit (1) nach Anspruch 1, **dadurch gekennzeichnet, dass** die Antriebseinheiten (7a) der pneumatischen Ventile (7) in dem pneumatischen Block (5) und die Magnetventilspulen (7b) der pneumatischen Ventile (7) in dem elektronischen Steuergerät separat angeordnet sind und die Magnetventilspulen (7b) im zusammengefügten Zustand über toleranzausgleichende Elemente positionierbar sind.

3. Integrierte Luftversorgungseinheit (1) nach Anspruch 1 oder 2, **dadurch gekennzeichnet, dass** der Luftverdichter (2) als Dreizylinder Stern-Kompressor ausgebildet ist.

4. Integrierte Luftversorgungseinheit (1) nach Anspruch 3, **dadurch gekennzeichnet, dass** der Dreizylinder Stern-Kompressor zentral über einen Pleuelzapfen gelagert ist.

5. Integrierte Luftversorgungseinheit (1) nach Anspruch 1 oder 2, **dadurch gekennzeichnet, dass** der Luftverdichter (2) als Zwei-Kolbenkompressor ausgebildet ist.

6. Integrierte Luftversorgungseinheit (1) nach Anspruch 5 **dadurch gekennzeichnet, dass** der Zwei-Kolbenkompressor zentral über einen Pleuelzapfen gelagert ist.

7. Integrierte Luftversorgungseinheit (1) nach einem der Ansprüche 1 bis 6, **dadurch gekennzeichnet, dass** innerhalb des pneumatischen Blockes (5) Kanäle als pneumatische Leitungen verlaufen und den Luftverdichter (2), den Lufttrockner (4), die pneumatischen Ventile (7) und die pneumatischen Anschlüsse (8) untereinander verbinden.

8. Integrierte Luftversorgungseinheit (1) nach einem der Ansprüche 1 bis 7, **dadurch gekennzeichnet, dass** das elektronische Steuergerät (6) über einen elektronischen Anschluss (9) verfügt und die integrierte Luftversorgungseinheit (1) mit zumindest dem Fahrzeugbordnetz verbindet.

9. Integrierte Luftversorgungseinheit (1) nach einem der Ansprüche 1 bis 8, **dadurch gekennzeichnet, dass** Sensoren, vorzugsweise Drucksensoren und/oder Beschleunigungssensoren und/oder Temperatursensoren, in der Luftversorgungseinheit (1) integriert sind.

10. Integrierte Luftversorgungseinheit (1) nach Anspruch 9, **dadurch gekennzeichnet, dass** einer der Sensoren ein Drucksensor ist, wobei der Drucksensor im pneumatischen Block (5) angeordnet ist.

11. Integrierte Luftversorgungseinheit (1) nach Anspruch 10, **dadurch gekennzeichnet, dass** der Drucksensor über toleranzausgleichende Elemente mit dem elektronischen Steuergerät (6) kontaktierbar ist.

12. Luftfedersystem für Fahrzeuge, wobei das Luftfedersystem eine integrierte Luftversorgungseinheit (1) nach wenigstens einem der Ansprüche 1 bis 11 aufweist.

13. Luftfedersystem für Fahrzeuge nach Anspruch 12 mit der integrierten Luftversorgungseinheit (1) und einer Umschaltventileinrichtung (130), **dadurch gekennzeichnet, dass** die Umschaltventileinrichtung vier 2/2-Wegeventile (131, 132, 133, 134) oder vier vorgesteuerte 2/2-Wegeventile (135, 136, 137, 138) aufweist.

## Claims

1. Integrated air supply unit (1), in particular for air suspension systems for motor vehicles, comprising an air compressor (2) having an electric motor (3) and an air dryer (4), wherein the air compressor (2) together with the electric motor (3), the air dryer (4) and multiple pneumatic connectors (8) form a functional unit, wherein the functional unit is formed at least from a pneumatic block (5) and an electronic control device (6), wherein the air compressor (2) is arranged in the pneumatic block (5) and is driven by way of the electric motor (3) which is attached to the pneumatic block (5) on the front side **characterized in that** the electronic control device (6) is attached to the pneumatic block (5) opposite to the electric motor (3), wherein a plurality of pneumatic valves (7) are arranged in part in the pneumatic block (5) and in part in the electronic control device (6).

2. Integrated air supply unit (1) according to Claim 1, **characterized in that** the drive units (7a) of the pneumatic valves (7) are arranged separately in the pneumatic block (5) and the magnetic valve coils (7b) of the pneumatic valves (7) are arranged separately in the electronic control device and the magnetic valve coils (7b) can be positioned in the joined together state by way of tolerance-compensating elements.

3. Integrated air supply unit (1) according to Claim 1 or 2, **characterized in that** the air compressor (2) is embodied as a three-cylinder star compressor.

4. Integrated air supply unit (1) according to Claim 3, **characterized in that** the three-cylinder star compressor is mounted centrally by way of a crankpin.

5. Integrated air supply unit (1) according to Claim 1 or 2, **characterized in that** the air compressor (2) is embodied as a two-piston compressor.

6. Integrated air supply unit (1) according to Claim 5, **characterized in that** the two-piston compressor is mounted centrally by way of a crankpin.

7. Integrated air supply unit (1) according to any one of Claims 1 to 6, **characterized in that** within the pneumatic block (5) ducts extend as pneumatic lines and connect the air compressor (2), the air dryer (4), the pneumatic valves (7) and the pneumatic connectors (8) to one another.

8. Integrated air supply unit (1) according to any of Claims 1 to 7, **characterized in that** the electronic control device (6) comprises an electronic connector (9) and the integrated air supply unit (1) connects to at least one vehicle electrical network.

9. Integrated air supply unit (1) according to any of Claims 1 to 8, **characterized in that** sensors, preferably pressure sensors and/or accelerating sensors and/or temperature sensors, are integrated into the air supply unit (1) .

10. Integrated air supply unit (1) according to Claim 9, **characterized in that** one of the sensors is a pressure sensor, wherein the pressure sensor is arranged in the pneumatic block (5) .

11. Integrated air supply unit (1) according to Claim 10, **characterized in that** the pressure sensor can be electrically contacted by the electronic control device (6) by way of tolerance-compensating elements.

12. Air suspension system for vehicles, wherein the air suspension system comprises an integrated air supply unit (1) according to at least one of the Claims 1 to 11.

13. Air suspension system for vehicles according to Claim 12 having the integrated air supply unit (1) and a switching valve device (30), **characterized in that** the switching valve device comprises four 2/2 directional control valves (131, 132, 133, 134) or four pilot-controlled 2/2 directional control valves (135, 136, 137, 138) .

## Revendications

1. Unité d'alimentation en air intégrée (1), en particulier pour des systèmes de ressort pneumatique pour de véhicules automobiles, comprenant un compresseur d'air (2) avec un moteur électrique (3) et un sécheur d'air (4), dans laquelle le compresseur d'air (2) avec le moteur électrique (3), le sécheur d'air (4) et plusieurs raccords pneumatiques (8) forment une unité fonctionnelle, dans laquelle l'unité fonctionnelle est formée au moins par un bloc pneumatique (5) et un appareil de commande électronique (6), dans laquelle le compresseur d'air (2) est disposé dans le bloc pneumatique (5) et est entraîné par le moteur électrique (3) installé côté frontal sur le bloc pneumatique (5), **caractérisée en ce que** l'appareil de commande électronique (6) est installé en face du moteur électrique (3) sur le bloc pneumatique (5), dans laquelle plusieurs soupapes pneumatiques (7) sont disposées en partie dans le bloc pneumatique (5) et en partie dans l'appareil de commande électronique (6).

2. Unité d'alimentation en air intégrée (1) selon la revendication 1, **caractérisée en ce que** les unités d'entraînement (7a) des soupapes pneumatiques (7) sont disposées dans le bloc pneumatique (5) et les bobines de soupapes magnétiques (7b) des soupapes pneumatiques (7) sont disposées séparément dans l'appareil de commande électronique et les bobines de soupapes magnétiques (7b) peuvent être positionnées dans l'état assemblé au moyen d'éléments de compensation de tolérances.

3. Unité d'alimentation en air intégrée (1) selon une revendication 1 ou 2, **caractérisée en ce que** le compresseur d'air (2) est formé par un compresseur en étoile à trois cylindres.

4. Unité d'alimentation en air intégrée (1) selon la revendication 3, **caractérisée en ce que** le compresseur en étoile à trois cylindres est supporté au centre au moyen d'un maneton de bielle.

5. Unité d'alimentation en air intégrée (1) selon une revendication 1 ou 2, **caractérisée en ce que** le compresseur d'air (2) est formé par un compresseur à deux pistons.

6. Unité d'alimentation en air intégrée (1) selon la revendication 5, **caractérisée en ce que** le compresseur à deux pistons est supporté au centre au moyen d'un maneton de bielle.

7. Unité d'alimentation en air intégrée (1) selon l'une quelconque des revendications 1 à 6, **caractérisée en ce que** des canaux courent à l'intérieur du bloc pneumatique (5) en tant que conduites pneumatiques et relient entre eux le compresseur d'air (2), le sécheur d'air (4), les soupapes pneumatiques (7) et les raccords pneumatiques (8) .

8. Unité d'alimentation en air intégrée (1) selon l'une quelconque des revendications 1 à 7, **caractérisée en ce que** l'appareil de commande électronique (6) dispose d'une connexion électronique (9) et relie l'unité d'alimentation en air intégrée (1) au moins au réseau de bord du véhicule.

9. Unité d'alimentation en air intégrée (1) selon l'une quelconque des revendications 1 à 8, **caractérisée en ce que** des capteurs, de préférence des capteurs de pression et/ou des détecteurs d'accélération et/ou des capteurs de température sont intégrés dans l'unité d'alimentation en air (1).

10. Unité d'alimentation en air intégrée (1) selon la revendication 9, **caractérisée en ce qu'**un des capteurs est un capteur de pression, dans laquelle le capteur de pression est disposé dans le bloc pneumatique (5).

11. Unité d'alimentation en air intégrée (1) selon la revendication 10, **caractérisée en ce que** le capteur de pression peut être mis en contact avec l'appareil de commande électronique (6) au moyen d'éléments de compensation de tolérances.

12. Système de ressort pneumatique pour des véhicules, dans lequel le système de ressort pneumatique présente une unité d'alimentation en air intégrée (1) selon au moins une des revendications 1 à 11.

13. Système de ressort pneumatique pour des véhicules selon la revendication 12 avec l'unité d'alimentation en air intégrée (1) et un dispositif de soupapes d'inversion (130), **caractérisé en ce que** le dispositif de soupapes d'inversion présente quatre soupapes à 2/2 voies (131, 132, 133, 134) ou quatre soupapes à 2/2 voies précommandées (135, 136, 137, 138).
